Europäisches Patentamt

**European Patent Office**

**Office européen des brevets**

(11) Numéro de publication: **0 092 455**
**A1**

## (12) DEMANDE DE BREVET EUROPEEN

(21) Numéro de dépôt: **83400662.9**

(22) Date de dépôt: **30.03.83**

(51) Int. Cl.³: **B 66 D 3/02**, B 25 B 25/00,
F 16 G 11/10, H 02 G 1/06

(30) Priorité: **02.04.82 FR 8205765**

(71) Demandeur: **TRACTEL S.A., 85-87 avenue Jean Lolive,
F-93170 Bagnolet (FR)**

(43) Date de publication de la demande: **26.10.83
Bulletin 83/43**

(72) Inventeur: **Cavelieri, Michel, 64, rue Massue,
F-94300 Vincennes (FR)**

(84) Etats contractants désignés: **CH DE GB IT LI SE**

(74) Mandataire: **Collignon, Pierre et al, Cabinet
Collignon 6, rue de Madrid, F-75008 Paris (FR)**

(54) **Appareil de traction pour le halage d'un câble, d'une barre ou d'un organe comparable.**

(57) L'appareil est du type comprenant deux pinces de serrage composées chacune d'une paire de mâchoires (15-17, 16-18) actionnée par des biellettes de serrage (25-27, 26-28) reliées à un levier de manoeuvre (3) par l'intermédiaire de bielles de liaison (9, 10) articulées à ce levier de part et d'autre d'un axe de pivotement (4) du levier situé sur le prolongement d'une barre de guidage (1) sur laquelle coulisse l'une des deux mâchoires de chaque pince, les deux pinces se déplaçant en sens inverses en se serrant dans l'un des deux sens de déplacement.

Selon l'invention, chacune des mâchoires (17-18) opposées aux mâchoires guidées (15-16) est disposée sur les axes (33) à (36) des articulations aux biellettes (25) à (28) de façon que, par rotation de 180° autour de son axe longitudinal, elle puisse présenter en regard de la mâchoire de guidage (15-16) de la même pince l'une ou l'autre de ses deux faces opposées (39-41) et (40-42) comportant chacune un profil de serrage tel qu'une gorge.

ACTORUM AG

1

# Appareil de traction pour le halage d'un câble, d'une barre ou d'un organe comparable.

On connait des appareils de traction conçus pour haler un câble par un système de leviers actionnant deux pinces autoserreuses suivant un mouvement de va-et-vient qui entraîne les deux pinces en sens inverses en provoquant le serrage sur le câble de la pince qui se déplace dans le sens du halage et le desserrage de l'autre pince qui se déplace en sens inverse. Chacune des pinces est constituée par deux mâchoires opposées entre lesquelles le câble peut être serré et qui sont réunies par des biellettes de serrage s'articulant sur ces deux mâchoires.

Le guidage du mouvement de va-et-vient des pinces peut être assuré par une barre rectiligne d'un profil approprié sur laquelle est guidée une mâchoire de chaque pince et à une extrémité de laquelle s'articule le levier de manoeuvre qui actionne deux bielles s'articulant à ce levier en deux points symétriques par rapport à l'articulation entre la barre de guidage et le levier, ces deux bielles entraînant respectivement les deux pinces.

Généralement, chaque mâchoire de pince comporte une seule forme de gorge sur sa face en regard de la mâchoire opposée, cette forme de gorge étant adaptée à une grosseur de câble de telle sorte qu'un appareil de traction donné pour le halage de câbles ne convient que pour des diamètres de câble compris entre des limites assez étroites déterminées par les profils des gorges de ses mâchoires. L'utilisation pour les mâchoires de faces de serrage en matière élastique déformable peut permettre une certaine adaptation pour le serrage de câbles de diamètres un peu différents mais la marge de variation des diamètres de câble reste étroite.

La présente invention a pour but de proposer une constitution particulière des mâchoires opposées aux mâchoires guidées conçue de façon à augmenter considérablement la plage des diamètres de câble compatibles avec les mâchoires d'un appareil de traction du type exposé ci-dessus.

Le principe de l'invention consiste essentiellement à munir de deux faces de serrage opposées chaque mâchoire non guidée et à prévoir un montage de ces mâchoires qui permette d'amener, en regard de la mâchoire guidée de chaque pince, l'une ou l'autre des faces de serrage de la mâchoire opposée.

Cette disposition peut présenter en premier lieu l'avantage, lorsque les deux faces opposées ont des profils identiques, de doubler la durée d'utilisation de ces mâchoires, mais elle permet surtout, par l'utilisation de profils différents de gorges sur les deux faces de serrage des mâchoires non guidées, d'élargir considérablement la plage des diamètres de câble compatibles, comme on l'expliquera plus en détail ci-après.

Conformément à l'invention, les mâchoires non guidées sont montées dans leurs deux positions sur les mêmes axes des biellettes de serrage de façon que le passage de ces mâchoires non guidées de l'une à l'autre de leurs positions s'effectue par une rotation de ces mâchoires de 180° autour de leur axe longitudinal parallèle à la barre de guidage, les logements ménagés dans ces mâchoires pour les axes porteurs reprenant la même position par la rotation ci-dessus. Dans l'une ou l'autre des deux positions de montage d'une mâchoire non guidée, ce montage peut être complété par un système de verrouillage particulièrement simple et pratique réalisé à l'aide du coulissement d'une plaque latérale amovible présentant des boutonnières appropriées dont un bord de partie étroite est destiné, en position de verrouillage, à s'engager dans une gorge périphérique correspondante de l'axe porteur sur lequel est engagée la boutonnière.

Selon une caractéristique complémentaire de l'invention, les mâchoires retournables sont constituées ou revêtues d'une matière compressible telle que le caoutchouc ou d'une matière de dureté appropriée de façon à favoriser la retenue et la conservation de la barre, du câble ou du fil actionné par l'appareil sans imposer l'utilisation d'un revêtement particulier pour la gorge de la mâchoire guidée.

Pour bien faire comprendre l'invention, on en décrira ci-après un exemple d'exécution en référence au dessin schématique annexé dans lequel :

la figure 1 est une vue de côté de l'appareil de halage ;

la figure 2 est une vue de détail en plan de son extrémité d'ancrage ;

la figure 3 est une vue de côté agrandie de l'une des pinces ; et

les figures 4 et 5 sont deux coupes transversales d'une partie de la pince montrant les deux positions différentes que peut prendre la mâchoire opposée à la mâchoire guidée.

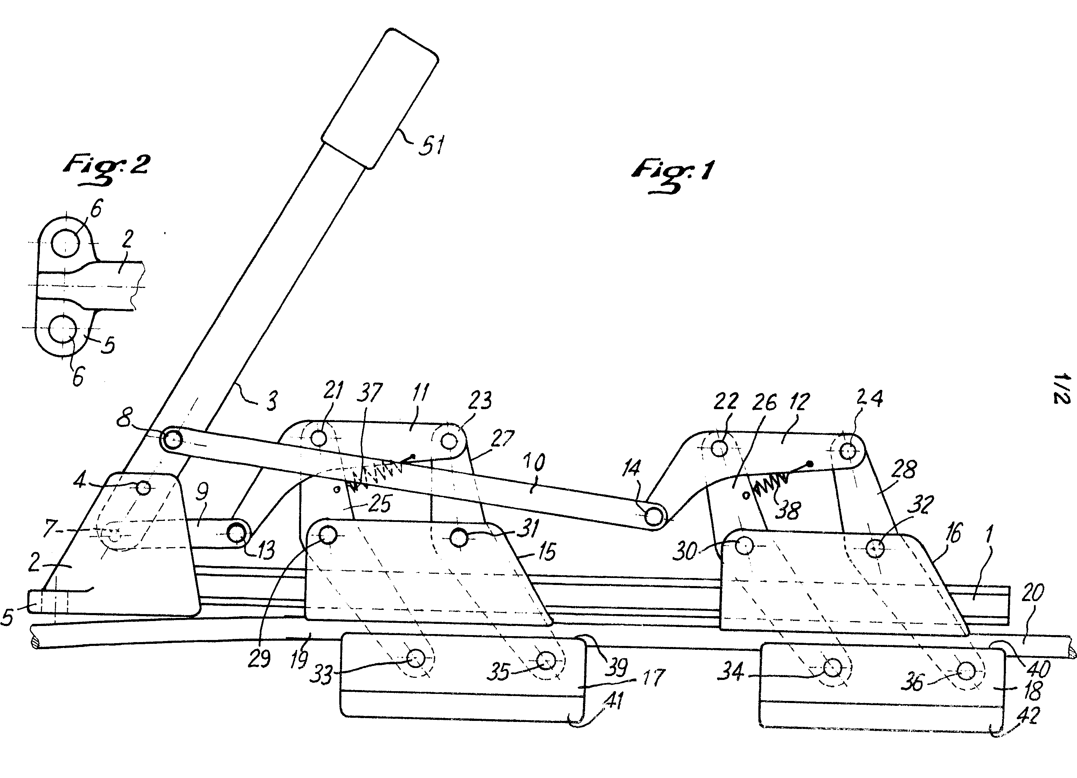

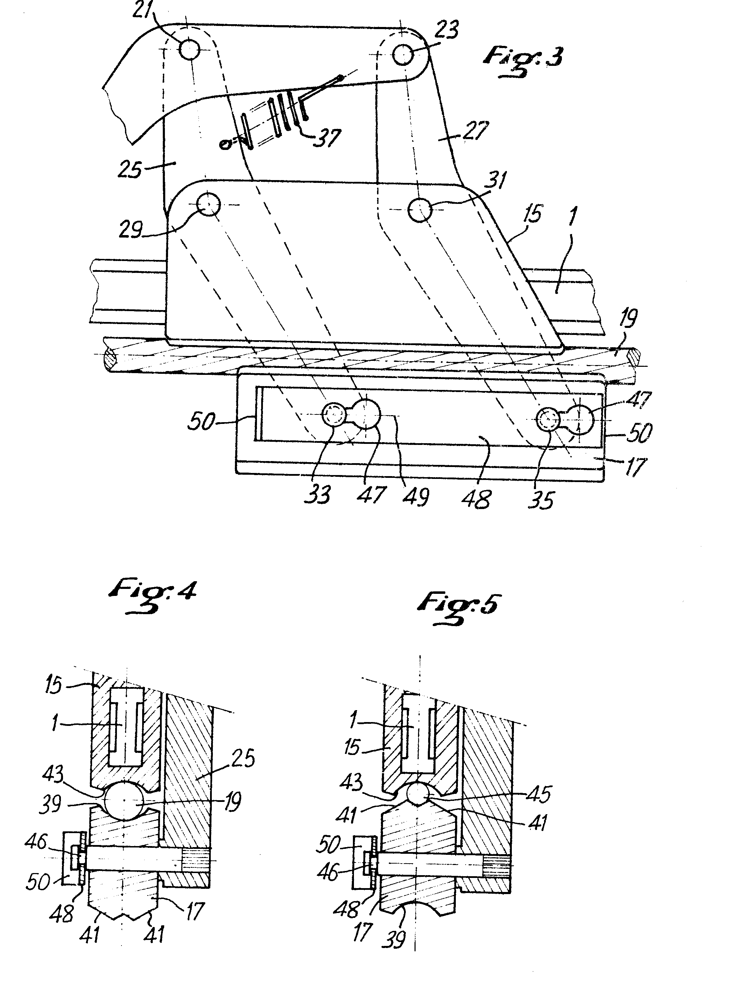

Dans l'exemple d'exécution représenté sur la figure 1, on a indiqué en 1 une barre de guidage constituée par exemple par un profilé métallique en I dont le contour apparait complètement sur les figures 4 et 5. A son extrémité d'ancrage, la barre de guidage 1 est solidaire d'un socle 2 sur lequel le levier de manoeuvre 3 s'articule par un axe 4. Le socle 2 peut comprendre une patte d'ancrage 5 qui peut présenter des trous 6 destinés à l'accrochage de l'appareil. De part et d'autre de son axe de pivotement 4, le levier de manoeuvre 3 s'articule par des axes 7-8 aux deux bielles de traction et de poussée 9-10 dont les extrémités opposées s'articulent aux flasques 11-12 des deux pinces par des axes 13-14. On a indiqué sur la figure 1 en 15-16 les mâchoires guidées des deux pinces constituant les mâchoires supérieures tandis que les mâchoires inférieures sont indiquées en 17-18. Entre la mâchoire supérieure et la mâchoire inférieure de chaque pince passe le câble 19 dont la partie située du côté tendu est indiquée en 20.

Sur le flasque 11 s'articulent par les axes 21-23 les deux biellettes de serrage 25-27 qui s'articulent sur la mâchoire 15 par les axes 29-31 et sur la mâchoire 17 par les axes 33-35. De façon analogue, sur le flasque 12 s'articulent par les axes 22-24 les deux biellettes de serrage 26-28 qui s'articulent aussi sur la mâchoire 16 par les axes 30-32 et sur la mâchoire 18 par les axes 34-36. Des ressorts de préserrage 37-38 peuvent être interposés respectivement entre les biellettes 25-26 et les flasques 11-12 comme on l'a représenté schématiquement sur la figure 1.

Conformément à l'invention, les mâchoires inférieures 17 et 18 sont retournables de façon à présenter vers le haut soit une face 39-40 à gorge de grand rayon, soit une face à gorge étroite entre deux parties latérales obliques 41-42. On voit ainsi que la position des mâchoires inférieures représentée sur la figure 1 est celle représentée en coupe sur la figure 4 pour la mâchoire inférieure 17 ; la face supérieure 39 de la mâchoire 17 est alors en regard d'une face analogue ou identique 43 également à grand rayon de la mâchoire supérieure guidée ; la face de serrage 44 de l'autre mâchoire guidée 16 est identique à la face 43.

Les mâchoires 15-17 placées comme le montrent les figures 1 et 4 ne conviendraient pas à la commande de la traction d'un câble 45 de diamètre beaucoup plus petit car ce câble ne pourrait pas être serré entre les mâchoires en coopération d'une même pince. C'est pourquoi pour la traction du câble 45 (figure 5) on renverse la position de la mâchoire 17 (et aussi bien entendu celle de la mâchoire 18), comme le montre la figure 5, tout en conservant les de
mêmes faces/serrage 43-44 pour les mâchoires guidées supérieures 15-16 car une gorge étroite peut coopérer avec une gorge large comme le montre la figure 5.

Le retournement des mâchoires inférieures 17-18 et leur verrouillage dans l'une ou l'autre de leurs deux positions peut se faire de façon très simple et très pratique par le dispositif représenté sur les figures 3 à 5.

Les axes 33 à 36, destinés à recevoir les mâchoires inférieures 17-18, se terminent à l'extérieur de ces mâchoires inférieures par une extrémité présentant une gorge périphérique 46 dans laquelle peut s'encastrer le pourtour de la partie étroite d'une boutonnière 47 ménagée dans une plaque latérale de verrouillage 48 s'étendant sur la longueur de la face externe de chaque mâchoire inférieure 17-18. Les boutonnières 47 sont symétriques par rapport à une ligne médiane longitudinale 49 et les extrémités 50 de la plaque 48 sont repliées extérieurement pour faciliter la manoeuvre de chaque plaque 48. Si, à partir de la position de verrouillage représentée sur la figure 3, on déplace la plaque 48 dans la direction de la ligne 49 de façon à amener les parties larges des deux boutonnières de la plaque à la place des parties étroites, il devient possible de retirer la plaque 48 et la mâchoire inférieure puis de remettre celle-ci en place après son retournement et de la verrouiller dans sa nouvelle position en engageant la plaque 48 sur les axes porteurs par les parties larges des boutonnières puis en ramenant la plaque en position de verrouillage pour laquelle les parties étroites des boutonnières s'engagent dans les gorges 46.

Bien que le fonctionnement de l'appareil de traction à deux pinces actionnées en sens inverses en mouvement de va-et-vient soit bien connu, on le rappellera brièvement ci-après. Si on suppose que la figure 1 montre l'appareil dans la position la plus écartée des deux pinces, c'est-à-dire pour la position extrême vers la droite de la poignée d'actionnement 51 du levier de manoeuvre 3, on comprend que la mâchoire 15 est à sa position extrême de gauche comme l'axe 7 situé à l'opposé de la poignée par rapport à l'axe de pivotement 4 du levier 3 tandis que la mâchoire 16 est à sa position extrême de droite. Dans ces conditions, si on tire sur la poignée 41 à l'opposé de la partie tendue 20 du câble, c'est-à-dire vers la gauche de la figure 1, on exerce par la bielle 10 une traction vers la gauche de la mâchoire 16 et par la bielle 9 une poussée vers la droite de la mâchoire 15. La traction exercée sur la mâchoire 16 provoque la fermeture de la pince 16-18 tandis que la poussée exercée sur la mâchoire 15 provoque l'ouverture de la pince 15-17 et il en résulte que le câble 19 se trouve halé par la mâchoire 16 jusqu'à ce que le levier 3 atteigne sa position extrême de gauche en amenant les deux pinces à leur position la plus proche. Lors de l'inversion du mouvement du levier 3, les forces exercées sur les deux mâchoires guidées 15-16 s'inversent et, comme ces forces sont appliquées par l'intermédiaire des biellettes de serrage 25 à 28, celles-ci exercent sur les mâchoires inférieures 17-18 des forces inversées qui assurent l'ouverture de la pince poussée 16-18 et la fermeture de la pince tirée 15-17 de sorte que le câble 19 se trouve de nouveau halé par suite de la double inversion du sens de déplacement des pinces d'une part et des positions relatives des deux mâchoires de chaque pince.

L'exemple d'exécution décrit ci-dessus et représenté au dessin n'a évidemment aucun caractère limitatif et on pourrait prévoir diverses modifications ou adjonctions sans s'écarter du cadre de l'invention définie par les revendications annexées.

## R E V E N D I C A T I O N S.

1. Appareil pour la traction d'un câble, d'une barre ou d'un fil, nu ou revêtu d'une gaine de protection, composé d'un système de deux mécanismes de serrage comprenant chacun une paire de mâchoires actionnée par une ou plusieurs biellettes de serrage reliées à un levier de manoeuvre par l'intermédiaire de bielles de liaison, elles-mêmes articulées audit levier de part et d'autre d'une barre servant de guidage aux deux mécanismes de serrage, par coulissement de l'une des deux mâchoires de chaque mécanisme, caractérisé en ce que les mâchoires (17-18) qui font face aux mâchoires de guidage, et qui sont actionnées, pour se rapprocher ou s'écarter de celles-ci, par une ou plusieurs biellettes de serrage, sont disposées sur les axes d'articulation avec ces biellettes de façon que, par rotation de 180° sur leur axe parallèle à la barre de guidage, elles puissent présenter, vis-à-vis de la mâchoire de guidage (15-16) du même mécanisme de serrage, l'une ou l'autre de leurs deux faces opposées (39-41 ; 40-42) inférieure ou supérieure comportant chacune un profil de serrage tel qu'une gorge.

2. Appareil suivant la revendication 1, dans lequel les faces supérieure et inférieure (39-41 ; 40-42) des mâchoires mobiles ont des profils différents de façon à permettre le serrage de deux catégories différentes de câble.

3. Appareil suivant la revendication 1 ou la revendication 2, dans lequel les mâchoires (17-18) faisant face aux mâchoires de guidage sont fixées de façon amovible sur les axes (33 à 36) les reliant aux biellettes de serrage, grâce à une plaque latérale (48) dont les boutonnières (47) de forme appropriée permettent, par coulissement de ladite plaque, de verrouiller ou de déverrouiller lesdites mâchoires amovibles sur des gorges des axes, dont l'emplacement correspond à celui des boutonnières de la plaque latérale.

4. Appareil suivant la revendication 3, dans lequel les mâchoires amovibles (17-18) sont constituées ou revêtues d'une matière compressible telle que du caoutchouc ou d'une matière de dureté appropriée de façon à favoriser la retenue et la conservation de la barre, du câble ou du fil utilisé, sans qu'il soit nécessaire, pour autant, de revêtir la gorge de la mâchoire coulissante d'un matériau particulier.

Fig. 2

Fig. 1

1/2

0092455

0092455

2/2

Fig:3

Fig:4

Fig:5

**Office européen
des brevets**

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| Y | CH-A- 615 887 (LEHMANN et al.) <br> * Revendications 1,3; page 2, colonne de droite, lignes 20-62; figures 1-3 * | 1,2 | B 66 D 3/02 <br> B 25 B 25/00 <br> F 16 G 11/10 <br> H 02 G 1/06 |
| | --- | | |
| Y | US-A-1 653 747 (USHER) <br> * En entier * | 1-3 | |
| | ----- | | |

DOMAINES TECHNIQUES
RECHERCHES (Int. Cl. ³)

B 21 F
B 25 B
B 63 B
B 65 H
B 66 D
F 16 G
H 02 G

Le présent rapport de recherche a été établi pour toutes les revendications

| Lieu de la recherche <br> LA HAYE | Date d'achèvement de la recherche <br> 29-06-1983 | Examinateur <br> ROSENBAUM H.F.J. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82